# DEMANDE DE BREVET EUROPEEN

(11) **EP 4 194 969 A1**
(43) Date de publication de la demande: **14.06.2023**
(21) Numéro de dépôt: 21212696.5
(22) Date de dépôt: 07.12.2021
(51) Int. Cl.: G04B 37/08, G04B 37/00, G04B 39/02

(54) **DISPOSITIF DE FERMETURE ÉTANCHE POUR BOÎTE DE MONTRE**

(71) Demandeur: The Swatch Group Research and Development Ltd, 2074 Marin (CH)
(72) Inventeur: GARCIN, Simon, 1585 Salavaux (CH); NASRI, Nassima, 2560 Nidau (CH)
(74) Mandataire: ICB SA

(57) **Abrégé**

La présente invention concerne un dispositif de fermeture étanche pour une boîte de montre, ledit dispositif comprenant un joint annulaire (1) agencé pour être placé entre une carrure (2) et un fond (3) , une lunette () ou une glace (4), ou une lunette et une glace, ou un fond et une glace, ledit joint (1) présentant sur sa partie médiane un renflement (10) faisant saille sur sa face latérale externe (11), ledit renflement étant agencé pour être engagé contre la carrure (3) et comprimé consécutivement à la mise en place du fond ou de la glace sur la carrure, ledit renflement étant délimité par un dégagement de matière supérieur (12) et inférieur (13) de part et d'autre du renflement (10) à l'état non comprimé du joint (1) pour faciliter sa mise en place et sa déformation.

## Description

### Domaine technique de l'invention

L'invention concerne un dispositif d'étanchéité pour boîte de montre. L'invention concerne aussi une boîte de pièce d'horlogerie comprenant un tel système. L'invention concerne encore une pièce d'horlogerie comprenant un tel système ou une telle boîte. L'invention concerne enfin un procédé de montage d'une telle pièce d'horlogerie ou d'une telle boîte.

### Arrière-plan technologique

Dans le domaine de l'horlogerie, on cherche à étanchéifier au mieux les boîtiers et préserver leur intérieur de toute intrusion d'humidité, pouvant générer de la buée et empêcher toute lecture correcte de l'heure. A plus long terme, il est également nécessaire de préserver toutes les pièces métalliques internes, dont celles constitutives du mouvement, d'un vieillissement prématuré dû à l'oxydation. Ce besoin d'étanchéité s'avère même particulièrement critique pour des montres destinées à un usage en immersion, telles que des montres de plongée.

On connaît déjà des dispositifs d'étanchéité d'une glace, d'une lunette, d'une glace de fond, ou d'un fond sur une carrure, dans lesquels la glace, la lunette et/ou le fond sont chassés et maintenus en place sur la carrure par le biais d'un joint réalisé en un matériau apte à être compressé et réaliser l'étanchéité.

Les joints qui ont qui la double fonction d'étanchéité et de tenue sont en général des joints I-ring en matière élastomère et de forme annulaire.

Un problème connu relatif aux joints annulaires concerne leur susceptibilité au pincement lors du chassage du fond, de la lunette ou de l'une des glaces sur la carrure et/ou le fond lorsqu'ils subissent des forces de compression ou de frottement axial, ce qui peut résulter en leur cisaillement partiel, voire même total, et en tous les cas fortement détériorer les propriétés d'étanchéité recherchées. Afin de réduire les risques d'endommagement de tels joints lorsqu'ils subissent des efforts de déformation, et parallèlement d'améliorer leurs propriétés d'étanchéité, des joints présentant un chanfrein ont été introduits. En raison de la pente formée par le chanfrein, la fiabilité de l'étanchéité est accrue, et parallèlement, grâce à la réduction des forces de frottement exercées, les efforts en cisaillement sont également minimisés et par conséquent la robustesse et la durée de vie augmentée.

Toutefois, le risque de pincement reste présent lorsque le taux de compression du joint est élevé. L'augmentation de la déformation du joint produit une accumulation de matière à la base du joint et un pied se forme, ce qui se traduit par une difficulté lors de l'opération de chassage, voire une impossibilité d'effectuer le chassage complètement, ainsi qu'une pénibilité pour l'opérateur.

De plus, les fluctuations du taux de compression inhérentes aux tolérances d'usinage engendrent différents niveaux de déformations plastiques, qui peuvent nuire à la qualité du procédé (sensation de défaut à la fermeture, fond mal fermé avec un jour visible, et risque de réduction d'étanchéité).

Un but de la présente invention est par conséquent de proposer un joint permettant d'améliorer la qualité de fermeture, qui soit plus robuste et qui nécessite moins de force lors du chassage.

### Résumé de l'invention

L'invention résout les inconvénients précités en proposant un joint présentant sur sa partie médiane un renflement faisant saille sur l'une des faces latérales, et qui permet à la fois d'assurer l'étanchéité et la tenue entre deux éléments d'une pièce d'horlogerie.

A cet effet, la présente invention concerne un dispositif de fermeture étanche pour une boîte de montre, ledit dispositif comprenant un joint présentant une face supérieure, une face inférieure, une face latérale interne et une face latérale externe, le joint étant agencé pour être placé entre un premier élément et un deuxième élément destiné à être chassé sur le premier élément, ledit joint présentant un dégagement de matière aux deux extrémités opposées de l'une des faces latérales sur une hauteur h' de manière à délimiter sur sa partie médiane un renflement d'une épaisseur e' faisant saille sur l'une des faces latérales du joint, le renflement étant agencé pour être comprimé consécutivement à la mise en place du deuxième élément sur le premier élément.

Selon l'invention, le dégagement de matière présente une surface qui est inscrite dans un rectangle dont la longueur correspond à la hauteur h', et dont la largeur correspond à l'épaisseur e' du renflement et d'aire Ar, et ce que l'aire As de la section du dégagement de matière est inférieure à l'aire Ar du rectangle et supérieure à la moitié de l'aire du rectangle Ar/2.

Conformément à d'autres variantes avantageuses de l'invention :
- les dégagements de matière comprennent un premier dégagement supérieur permettant le guidage du premier élément sur le deuxième élément, et un deuxième dégagement inférieur permettant d'absorber la déformation plastique du renflement au niveau des deux extrémités opposées de l'une des faces latérales du joint ;
- le renflement est symétrique ou dissymétrique ;
- le joint présente une hauteur comprise entre 0.5m et 2.0 mm ;
- l'épaisseur du joint est comprise entre 0.3mm et 0.8mm ;
- la hauteur du dégagement est comprise entre 0.1mm et 0.4mm ;
- l'épaisseur du renflement est comprise entre 0.05mm et 0.25mm ;
- le joint présente une section radiale dont l'aire supérieure S0 et l'aire inférieure S2 sont inférieures à l'aire médiane S1, les aires étant déterminées à l'état non déformée du joint ;
- le renflement présente une section trapézoïdale, une section en forme de bosse, ou en forme de rampe.

L'invention concerne également une boîte de montre comprenant une carrure, une lunette, un fond, une glace et un dispositif d'étanchéité conforme à l'invention.

L'invention concerne aussi une montre comprenant un dispositif d'étanchéité et/ou une boîte selon l'invention.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente une vue en coupe d'un dispositif selon un exemple préféré de réalisation de l'invention ;
- la figure 2 représente une vue en coupe d'un joint équipant le dispositif de la figure 1 ;
- les figures 3a à 3c représentent des vues en coupe de différents mode de réalisation d'un joint équipant un dispositif conforme à l'invention.

### Description détaillée de l'invention

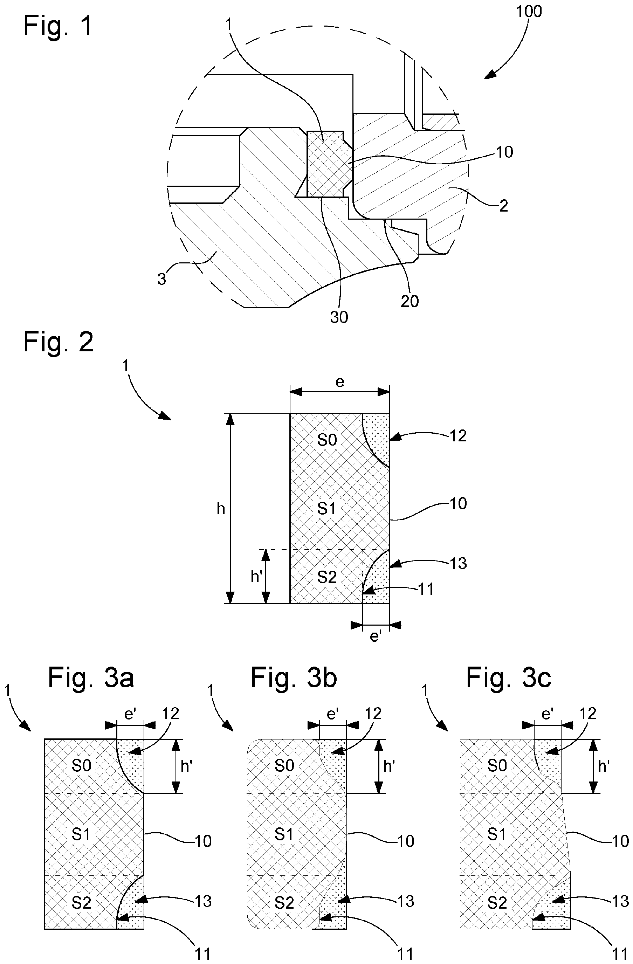

Un premier mode de réalisation d'une montre équipée d'un dispositif conforme à l'invention est décrit ci-après en référence aux figures 1, 2 et 3a à 3c.

L'invention concerne un dispositif de fermeture étanche pour une boîte de montre, ledit dispositif comprenant un joint 1 agencé pour être placé entre un premier élément et un deuxième élément destiné à être chassé sur le premier élément. Le premier élément et le deuxième élément étant choisi parmi : une carrure, un fond, une lunette, une glace.

Dans un but de lisibilité et compréhension de l'invention, seul le chassage d'un fond sur une carrure sera décrit par la suite. Le chassage d'une glace sur une carrure, d'une glace sur une lunette, d'une glace sur un fond ou d'une lunette sur carrure sera bien évidemment similaire.

La montre comprend une boîte 100 de pièce d'horlogerie et en outre un mouvement horloger qui est destiné à être monté dans la boîte de montre afin de le protéger de l'environnement extérieur. Le mouvement horloger peut être un mouvement électronique ou un mouvement mécanique, notamment un mouvement automatique.

La boîte de montre 100 comprend une carrure 2, un fond 3 et un joint d'étanchéité 1. La boîte de montre peut aussi comprendre une glace et une lunette, tournante ou non (non représentées sur les figures).

Le fond 3 est chassé sur la carrure jusqu'à venir en butée contre la carrure 2. La glace est, elle aussi, chassée sur la carrure, notamment par l'action du joint d'étanchéité.

Le joint d'étanchéité 1 est de forme annulaire et présente une face supérieure, une face inférieure, une face latérale interne et une face latérale externe 11.

Le joint 1 comprend sur sa partie médiane un renflement 10 faisant saille sur l'une de ses faces latérales, le renflement 10 étant agencé pour être engagé contre la carrure 3 et comprimé entre le fond et la carrure consécutivement à la mise en place du fond 2 ou de la glace sur la carrure 3.

Dans l'exemple illustré, le renflement 10 fait saillie sur la face latérale externe dans le cas du chassage d'un fond sur une carrure. Le renflement 10 peut bien évidemment faire saillie sur la face latérale interne du joint, une telle disposition est par exemple utile dans le cadre d'un chassage d'une glace sur la carrure, la lunette ou le fond.

Le joint d'étanchéité 1 est réalisé dans un matière déformable de manière à ce qu'il puisse être compressé.

La matière pour réaliser le joint est choisie parmi : asutane, TPU polyéther PU ou polyester PU, TPU polycaprolactone copolyester type Pearlthane, TPU polyadipate ester type Isotane, TPE polyéther bloc amide type Pebax, TPE polyester type Hytrel ou polyether ester type Arnitel, polyamides et copolymides type Grilamid, Zytel, Rilsan; ainsi que les polymères fluorés type Tefzel, ou Neoflon.

Comme on peut l'observer à la figure 2, les dégagements 12, 13 disposés de part et d'autre du renflement 10 forment un volume libre supérieur et inférieur à l'état non comprimé du joint 1. Les volumes libres supérieur et inférieur 12, 13 possèdent chacun une fonction distincte, à savoir faciliter la mise en place des éléments entre eux pour le volume libre supérieur et absorber la déformation du renflement 10 pour le volume libre inférieur. Ainsi, les volumes libres supérieur 12 et inférieur 13 permettent d'éviter les pincements du joint 1 lors du chassage des éléments entre eux.

Avantageusement, le joint 1 présente une section radiale dont l'aire supérieure S0 et l'aire inférieure S2 sont inférieures à l'aire médiane S1, les aires étant déterminées à l'état non déformé du joint., la partie médiane du joint assurant la tenue des éléments entre eux ainsi que l'étanchéité.

Les dégagements de matière comprennent un premier dégagement supérieur 12 permettant le guidage du premier élément sur le deuxième élément, et un deuxième dégagement inférieur 13 permettant d'absorber la déformation plastique du renflement 10 au niveau des deux extrémités opposées de l'une des faces latérales du joint. Bien évidemment, une seule et même forme de volume libre permet d'assurer aussi bien une fonction que l'autre selon le sens de montage du joint.

Chaque dégagement 12, 13 s'étend sur une hauteur h' et une épaisseur e' correspondant à l'épaisseur du renflement 10, de manière à délimiter sur sa partie médiane le renflement 10 faisant saille sur l'une des faces latérales.

Avantageusement, le dégagement de matière présente une surface qui est inscrite dans un rectangle dont la longueur correspond à la hauteur h', et dont la largeur correspond à l'épaisseur e' du renflement et d'aire Ar, et ce que l'aire As de la section de l'enlèvement de matière est inférieure à l'aire Ar du rectangle et supérieure à la moitié de l'aire du rectangle Ar/2.

Autrement dit, la surface de matière restante au niveau du dégagement de matière est inscrite dans un triangle rectangle qui a pour sommets un sommet de la face supérieure ou inférieure du joint et un sommet du renflement 10. Les deux côtés du triangle rectangle étant parallèles aux bords latéraux et aux bords supérieur et inférieur, et ayant une longueur correspondant à la hauteur h', et une largeur correspondant à l'épaisseur e'.

Selon un mode de réalisation préférentiel de l'invention, le renflement 10 du joint 1 est symétrique par rapport au plan médian (plan séparant le joint en son centre) du joint 1, comme illustré sur la figure 2. Le renflement peut également être dissymétrique comme illustré à la figure 3c. Il en va de même pour les dégagements de matières supérieur et inférieur 12, 13.

Tel qu'illustré sur les figures représentant les différents modes de réalisation, le renflement 10 présente une section trapézoïdale, une section en forme de bosse, ou encore en forme de rampe.

Dans le cas du mode de réalisation préférentiel illustré à la figure 2, le renflement 10 présente une forme trapézoïdale de manière à former une surface plane suivie d'une surface inclinée.

Le joint 1 présente une hauteur h comprise entre 0.5mm et 2.0 mm, et une épaisseur e comprise entre 0.3mm et 0.8mm.

Le dégagement de matière 12, 13 comprend une hauteur h' comprise entre 0.1mm et 0.4mm et une épaisseur e' comprise entre 0.05mm et 0.25mm.

Le volume libre sur la partie inférieure du joint permet de régler les problèmes liés aux tolérances d'usinage qui peuvent engendrer différents niveaux de déformations plastiques et ainsi nuire à la qualité du procédé de montage du fond 3 sur la carrure 2 (sensation de défaut à la fermeture, fond mal fermé avec un jour visible, et risque de réduction d'étanchéité).

De même, le volume libre sur la partie supérieure du joint permet de former un volume libre de guidage ou pré-engagement sur sa partie supérieure et ainsi d'éviter un pincement ou un endommagement du joint. En effet, selon un lot de variations / circonstances possibles (centrage, positionnement, ...), il se peut que l'engagement du joint se fasse avec un défaut de co-planéité et/ou concentricité. Une concentration de pression se fait sur une portion restreinte du joint, et celui-ci est endommagé, comme mordu par la carrure.

Un procédé de montage d'un dispositif comprenant un fond 3, une carrure 2 et un joint 1, conforme à l'invention est décrit ci-après.

Dans une première étape, le joint 1 est chassé sur le fond 3, en butée à l'encontre d'une portée 30 du fond 3.

Dans une deuxième étape, le fond 3 est présenté en face de la carrure 2.

Dans une troisième étape, l'ensemble fond 3 et joint 1 est chassé dans la carrure 2 jusqu'à ce que le fond 3 vienne en butée à l'encontre d'un épaulement 20 de la carrure 2, le joint 1 étant alors comprimé entre la carrure 2 et le fond 3.

Une fois le tout assemblé, le dispositif 10 forme un système d'étanchéité de la boîte 100 au niveau de l'interface entre la carrure 2 et le fond 3.

Bien évidemment, un procédé de montage similaire peut être mis en place pour monter une glace sur la carrure.

L'invention concerne également une boîte de montre 100 comprenant une carrure 2, un fond 3, une glace et un dispositif d'étanchéité conforme à l'invention.

L'invention concerne aussi une montre comprenant un dispositif d'étanchéité et/ou une boîte selon l'invention

## Revendications

1. Dispositif de fermeture étanche pour pièce d'horlogerie, ledit dispositif comprenant un joint (1) présentant une face supérieure, une face inférieure, une face latérale interne et une face latérale externe (11), le joint (1) étant agencé pour être placé entre un premier élément (2) et un deuxième élément (3) destiné à être chassé sur le premier élément (2), ledit joint (1) présentant un dégagement (12, 13) de matière aux deux extrémités opposées de l'une des faces latérales sur une hauteur (h') de manière à délimiter sur sa partie médiane un renflement (10) d'une épaisseur (e') faisant saille sur l'une des faces latérales du joint (1), le renflement (10) étant agencé pour être comprimé consécutivement à la mise en place du deuxième élément (3) sur le premier élément (2), **caractérisé en ce que** le dégagement (12, 13) de matière présente une surface qui est inscrite dans un rectangle dont la longueur correspond à la hauteur (h'), et dont la largeur correspond à l'épaisseur (e') du renflement et d'aire Aᵣ, et ce que l'aire Aₛ de la section du dégagement (12, 13) de matière est inférieure à l'aire Aᵣ du rectangle et supérieure à la moitié de l'aire du rectangle Aᵣ/2.

2. Dispositif de fermeture étanche selon la revendication 1, **caractérisé en ce que** les dégagements (12, 13) de matière forment un premier dégagement supérieur (12) permettant le guidage du premier élément sur le deuxième élément, et un deuxième dégagement inférieur (13) permettant d'absorber la déformation plastique du renflement (10).

3. Dispositif de fermeture étanche selon l'une des revendications 1 à 2, **caractérisé en ce que** le renflement (10) et/ou le dégagement (12, 13) de matière est symétrique ou dissymétrique.

4. Dispositif de fermeture étanche selon l'une des revendications 1 à 3, **caractérisé en ce que** le joint (1) présente une hauteur (h) comprise entre 0.5mm et 2.0mm.

5. Dispositif de fermeture étanche selon l'une des revendications 1 à 4, **caractérisé en ce que** l'épaisseur (e) du joint (1) est comprise entre 0.3mm et 0.8mm.

6. Dispositif de fermeture étanche selon l'une des revendications 1 à 5, **caractérisé en ce que** la hauteur (h') du dégagement (12, 13) est comprise entre 0.1mm et 0.4mm.

7. Dispositif de fermeture étanche selon l'une des revendications 1 à 6, **caractérisé en ce que** l'épaisseur (e') du renflement (10) est comprise entre 0.05mm et 0.25mm.

8. Dispositif de fermeture étanche selon l'une des revendications 1 à 7, **caractérisé en ce que** le joint (1) présente une section radiale dont l'aire supérieure (S0) et l'aire inférieure (S2) sont inférieures à l'aire médiane (S1), les aires étant déterminées à l'état non déformée du joint (1).

9. Dispositif de fermeture étanche selon l'une des revendications 1 à 8, **caractérisé en ce que** le renflement (10) présente une section trapézoïdale, une section en forme de bosse, ou en forme de rampe.

10. Boîte de montre (100) comprenant une carrure (2), un fond (3), une glace et un dispositif de fermeture étanche selon l'une des revendications précédentes.

11. Montre comprenant un dispositif de fermeture étanche selon l'une des revendications 1 à 9 et/ou une boîte selon la revendication 10.
